# EUROPEAN PATENT SPECIFICATION

(11) **EP 2 950 642 B1**
(45) Date of publication and mention of the grant of the patent: **18.07.2018**
(21) Application number: 14710606.6
(22) Date of filing: 04.02.2014
(51) Int. Cl.: A01M 23/02, A01M 23/16, A01M 25/00

(54) **PEST BAIT STATION**
KÖDERSTATION FÜR SCHÄDLINGE
STATION D'APPÂT POUR NUISIBLES

(30) Priority: 04.02.2013 GB 201301924
(43) Date of publication of application: 09.12.2015
(73) Proprietor: Urquhart, Iain, Market Drayton Shropshire TF9 3SW (GB)
(72) Inventor: Urquhart, Iain, Market Drayton Shropshire TF9 3SW (GB)
(74) Representative: Wynne-Jones, Lainé and James LLP
(86) International application number: PCT/GB2014/050311
(87) International publication number: WO 2014/118583

(56) References cited:
- WO-A1-97/39622
- DE-U1- 20 314 302
- DE-U1- 29 709 597
- FR-A1- 2 516 747
- RO-B1- 122 889
- US-A- 5 406 742

## Description

The present invention relates to pest bait stations.

Conventional pest bait stations typically comprise a box having at least one access point/aperture. Poison or a trap is held within the box and the intention is that pests, such as rats, enter the box and succumb to the poison/trap. A problem associated with such conventional bait stations is that animals other than the target pests can enter and be harmed/killed by the poison/trap.

Embodiments of the present invention are intended to address at least the abovementioned problem. Embodiments of the invention can provide an environmentally friendly bait station that allows both juvenile and adults rats, for example, to enter and feed, whilst non-target animals, such as mice, are prevented from gaining access and feeding. Embodiments can include a box-like structure set off the ground with one entry point. The entry point may be accessible to target pests via a ladder arrangement, which can comprise a drainpipe, centrally placed at a base of the box. A specific design feature that can preclude non-target animals from accessing the container comprises ladder/climbing formations within the drainpipe. The ladder formations can comprise a series of cuts, or other formations, in the drainpipe which, following multiple experiments, have been found to need to be set at an interval of around 75mm to allow access only by juvenile or adult rats.

FR2516747 describes a musk rat-trap comprising a raft mounted on a float. The hutch has a lid with a fastener fixed to the float by a plastic mesh which in turn is secured by the battens. Rat access is via a trap in the floor and a ladder, an upstand around the opening ensuring that the poison is safely confined to the hutch.

WO97/39622 describes a modular trapping system for adverse weather conditions that functions in a holding or a terminating mode on dry land, adjacent water, or in the water. The system comprises several interchangeable, user selectable components that may be conveniently assembled into a desired trap configuration in a minimal time period.

US 5406742 describes an animal trap which provides an electrically conductive base plate, an animal attractant substance supported above the base plate and an elelctrically conductive ladder or similar means arranged between the animal attractant and the base plate, but not electrically connected to the base plate; a power source capable of generating electric current is connected to the ladder and is arranged to release an electric current of sufficient strength to kill the animal when the animal is touching both the base plate and the ladder.

According to a first aspect of the present invention there is provided a pest bait station including or comprising:
a container including an access point giving direct or indirect access to a poison or trap location therein, the container being fitted/located above a ground/floor surface, and
a ladder arrangement having a lower end below and remote from said access point and leading directly or indirectly to the access point, the ladder arrangement including at least one climbing formation,
characterized in that:
   the container comprises a hole defining said access point;
   the ladder arrangement comprises an enclosed body leading upwardly to said access point and having a lower end and an opposing end, said lower and opposing ends being at least partially open, and said opposing end being located within said hole;
   a first said climbing formation, within said enclosed body, is spaced from said lower end of the ladder arrangement by a minimum distance of over 70 mm, and said lower end of the ladder arrangement is spaced apart from the ground/floor surface by a minimum distance of 8.89cm, so as to allow a target pest to ascend to the access point from said lower end, whilst preventing non-target animals from ascending.

The first climbing formation may be spaced from said lower end of the ladder arrangement by a minimum distance of up to 75mm.

The ladder arrangement may be cylindrical in shape. A portion of the ladder arrangement extending from the hole may have a length of around 10 mm to 195 mm.

The at least one climbing formation may comprise a slot, indentation or raised surface on a surface within the enclosed body.

At least part of the container may be disguised so as not to identify the container as a bait station. For example, the container can be shaped and/or include markings that give it a similar appearance to a conventional gas or electricity meter.

According to another aspect of the present invention there is provided a kit including a pest bait station substantially as described above, including;
- said container configured to be mounted above a ground/floor surface for use;
- said ladder arrangement, wherein said opposing end of said enclosed body is configured to be mounted within said hole of said container such that its lower end is below, and remote from, the access point of said container;
- and at least one trap or poison dose.

Whilst the invention has been described above, it extends to any inventive combination of features set out above or in the following description.

Although illustrative embodiments of the invention are described in detail herein with reference to the accompanying drawing, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The invention may be performed in various ways, and, by way of example only, embodiments thereof will now be described, reference being made to the accompanying drawing in which:

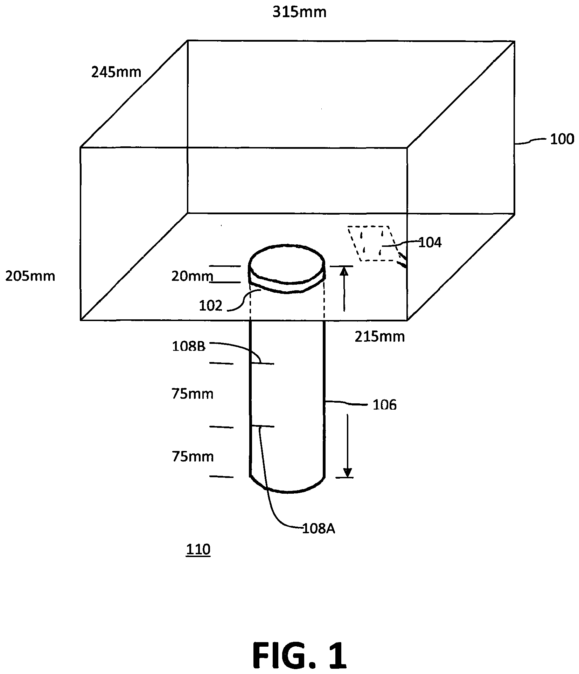

Figure 1 is a schematic drawing of an example pest bait station in situ.

Figure 1 shows an example pest bait station comprising a box-like container 100 having an entry point 102. In one embodiment the box has dimensions of 245 mm length by 315 mm wide by 205 mm deep (i.e. height) and is formed from heavy duty, injection-moulded plastic for durability and can be both weather resistant and tamper proof. It will typically be at least partially non-transparent and black in colour. However, it will be appreciated that the design, dimensions and material(s) used for the bait station can vary, e.g. it does not necessarily have to be box-shaped; it can include an access hatch for replacing the poison/trap, etc. At least part of the external design of the container and/or other components of the bait station can be camouflaged so that they are unrecognisable as a bait station to the majority of the public. For example, the container can be shaped and/or include markings that give it a similar appearance to a gas or electricity meter.

In the example bait station, the entry point 102 comprises a 68 mm circular hole that has been cut centrally in the base of the container 100. However, again, it will be understood that the design, dimensions and location of the entry point can vary, e.g. it can be another shape of hole (which could include a movable flap, trapdoor or the like) located elsewhere on the container.

The container 100 includes at least one poison/trap location 104. The poison can be in any form, e.g. blocks or grain, and will typically be slow-acting. The trap can be any suitable type, e.g. the known T-REX Rat Snap Trap™ snap trap. Some embodiments can include poison as well as a trap. The poison/trap location may be directly accessible via the entry point 102, or there may be in an accessible compartment (or the like) a short distance away from the entry point.

A ladder arrangement 106 provides access to the entry point 102. In the illustrated embodiment the ladder arrangement is in the form of a cylindrical drainpipe having a 68 mm diameter round downspout and a length of 215 mm. Its upper end is placed inside the central hole so it protrudes approximately 10 to 20 mm inside the container 100 (although it will be appreciated that this could vary and the upper end of the pipe could be flush with the base of the box), with its remaining length hanging down from the container. The ladder arrangement 106 includes formations that allow a target pest to at least ascend to the entry point 102 (and may also assist it with descending). In the illustrated example, the climbing formations comprise two cuts made in the round downspout. Measured from the base of the pipe 106, the first cut 108A (which is the climbing formation closest to the lower end of the ladder formation/remote from the access point) is at around 75 mm from the base and the second cut 108B at around 150 mm from the base. Thus, the first and second formations are spaced apart by around 75 mm. The length of each example cut in the pipe is approximately 35 mm, following the circumference of the pipe, but it will be understood that this can vary.

In another embodiment, the pipe 106 has a total length of 150 mm and is inserted into the container 100 so that only 10 - 20 mm of the pipe protrudes out of the container. Thus, around 140 - 130 mm of the pipe is inside the container. In this embodiment there is only a single climbing formation in the form of a slot/slit around 70.1mm - 75 mm from the lower (protruding) end of the pipe. The apparatus is fitted so that the base of the pipe is around 100 mm clear of the ground surface. Thus, the climbing formation is at least around 170 mm off the ground.

Experiments have been carried out to establish at what height juvenile rats (14 weeks old) managed to gain access to the bait station via the ladder arrangement. The first drainpipes used in the experiments included cuts in the drainpipe at 25 mm intervals up the entire length of the pipe. The rats easily managed to access the bait station when the cuts in the pipe measured 25 mm. In further experiments, the heights of the cuts were increased by 5 mm, i.e. 30 mm, 40 mm, up to 75 mm. At spacing of around 75 mm, the cuts effectively created a "ladder" which the rats could use to access the bait station (climbing up the inside of the pipe using the slots as ladder rungs). Younger rats were then introduced to the bait box with a pipe having cuts at 75 mm intervals. These younger rats, now only eight weeks old also managed to enter the bait box.

Similar experiments were also carried out with mice, both wild and behaviourally altered. The behaviourally altered mice were very adept in climbing the pipe provided it included climbing formations, such as the cuts. The maximum "ladder" these mice could access was the bait box was formed of cuts spaced apart by 70 mm. The wild mice never entered the bait box via the ladder arrangements tested.

It was found that securing the bait station 100 spaced above/up off the floor/ground 110 so the bottom of the pipe is around 8.89 cm to 10.16 cm (3.5 - 4 inches) from the floor/ground allowed juvenile rats to access the bait station and feed. This type of external bait station, if sited correctly, can help ensure non-target animals (animals other than juvenile/adult rats in this case) cannot access the bait secured within, which can alleviate environmentalists' concerns.

The skilled person will appreciate that several variations to the illustrated example bait station and ladder arrangement are possible. For instance, the ladder arrangement need not comprise a cylindrical component/drainpipe and could be a container having at least partially open ends of a different cross-sectional shape, and could be formed of more than one piece and include bends. It could extend towards the access point 102 at an angle other than 90° with respect to the horizontal. Further, the climbing formations need not be slots, but could be raised ridges, blind indentations or the like, having a variety of shapes, e.g. curved or straight. More than two climbing formations can be provided (with the design of at least one of them differing to the other climbing formations) and the spacing between them all need not be exactly the same. It will also be appreciated that the bait station/ladder arrangement can be redesigned to selectively allow pests other than younger/juvenile/adult rats to enter, whilst preventing other non-target animals from entering. This could be achieved by performing experiments as described above to ascertain what spacing of climbing formations allow the target animals to enter, but are not fully useable by non-target animals likely to try to enter.

Embodiments of the bait station described herein can be used instead of conventional rat bait stations and have advantages over them. As embodiments can be fixed above the ground, they can be suitable for use in a wet environment because the bait can remain dry. Another advantage is that due to the design of the bait station, only the target pests, e.g. juvenile/adult rats, are able to access the box. Smaller rodents like mice, wood voles and field voles are known to feed from conventional bait stations on the market. This means that embodiments can help prevent secondary poisoning. This is a major selling point where pest control is required in an environmentally sensitive area, or where there are rare or endangered species. Due to the visual anonymity of the embodiments of the bait station, they can be suitable for installation around restaurants, factories, museums and other public places because they would not be recognised as a bait station by the vast majority of the public and therefore not attract unwanted interference/attention.

## Claims

1. A pest bait station including:
a container (100) including an access point (102) giving direct or indirect access to a poison or trap location (104) therein, the container being fitted/located above a ground/floor surface (11), and
a ladder arrangement (106) having a lower end below and remote from said access point (102) and leading upwardly and directly or indirectly to the access point (102), the ladder arrangement (106) including at least one climbing formation (108A, 108B); **characterized in that**:
- the container (100) comprises a hole defining said access point (102);
- the ladder arrangement comprises an enclosed body leading upwardly to said access point (102), and having a lower end and an opposing end, said lower and opposing ends being at least partially open, and said opposing end being located within said hole;
- a first said climbing formation (108A), within said enclosed body, is spaced from said lower end of the ladder arrangement by a minimum design distance over 70mm, and said lower end of the ladder arrangement is spaced apart from the ground/floor surface (11) by a minimum distance of 8.89cm, so as to allow a target pest to ascend to the access point (102) from said lower end, whilst preventing non-target animals from ascending.

2. A pest bait station according to claim 1, wherein said first climbing formation (108A) is spaced from said lower end of the ladder arrangement by a minimum distance of up to 75mm.

3. A pest bait station according to claim 1 or claim 2, wherein the ladder arrangement (106) is at least partially cylindrical in shape.

4. A pest bait station according to any one of the preceding claims, wherein the at least one climbing formation (108) comprises a slot, indentation or raised surface on a surface within the enclosed body (106).

5. A pest bait station according to any one of the preceding claims, wherein at least part of the container (100) is disguised so as not to identify the container as a pest bait station.

6. A kit for a bait station according to any one of claims 1 to 5, including;
- said container (100) configured to be mounted above a ground/floor surface (110) for use; and
- said ladder arrangement, wherein said opposing end of said enclosed body is configured to be mounted within said hole of said container (100) such that its lower end is below, and remote from, the access point (102) of said container, in use;
- and at least one trap or poison dose.

## Patentansprüche

1. Köderstation für Schädlinge, umfassend einen Behälter (100) mit einem Zugangspunkt (102), der einen direkten oder indirekten Zugang zu einem Gift oder einem Fallenort (104) im Behälter gewährt, wobei der Behälter über einem Boden / einer Bodenoberfläche (11) angeordnet ist; und eine Leiteranordnung (106), die ein unteres Ende unter und entfernt von dem Zugangspunkt (102) aufweist und nach oben und direkt oder indirekt zu dem Zugangspunkt (102) führt, wobei die Leiteranordnung (106) wenigstens eine Kletterformation (108A, 108B) aufweist, **dadurch gekennzeichnet, daß** der Behälter (100) ein Loch aufweist, das den Zugangspunkt (102) bildet, daß die Leiteranordnung einen umschlossenen Körper bildet, der nach oben zu dem Zugangspunkt (102) führt, und ein unteres sowie ein gegenüberliegendes Ende hat, wobei dieses untere und dieses gegenüberliegende Ende wenigstens teilweise offen sind, und das gegenüberliegende Ende in dem Loch angeordnet ist; wobei des weiteren eine erste Kletterformation (108A) in dem umschlossenen Körper und dem unteren Ende der Leiteranordnung einen minimalen Konstruktionsabstand von mehr als 70 mm hat, und das untere Ende der Leiteranordnung von der Bodenoberfläche (11) einen minimalen Abstand von 8,89 cm aufweist, so daß einem Zieltier ermöglicht wird, von dem unteren Ende zu dem Zugangspunkt (102) aufzusteigen, während Nicht-Zieltiere am Aufsteigen gehindert werden.

2. Köderstation für Schädlinge nach Anspruch 1, **dadurch gekennzeichnet, daß** die erste Kletterformation (108A) von dem unteren Ende der Leiteranordnung einen minimalen Abstand von bis zu 75 mm aufweist.

3. Köderstation für Schädlinge nach Anspruch 1 oder 2, **dadurch gekennzeichnet, daß** die Leiteranordnung (106) wenigstens teilweise zylindrisch geformt ist.

4. Köderstation für Schädlinge nach einem der vorhergehenden Ansprüche, **dadurch gekennzeichnet, daß** wenigstens eine Kletterformation (108) einen Schlitz, eine Vertiefung oder erhabene Oberfläche auf einer Oberfläche innerhalb des umschlossenen Körpers (106) aufweist.

5. Köderstation für Schädlinge nach einem der vorhergehenden Ansprüche, **dadurch gekennzeichnet, daß** wenigstens ein Teil des Behälters (100) sich so unterscheidet, daß der Behälter nicht als Köderstation für Schädlinge identifiziert wird.

6. Ausrüstung für eine Köderstation für Schädlinge nach einem der Ansprüche 1 bis 5, **dadurch gekennzeichnet, daß** der Behälter (100) gebaut ist, um über einem Boden / einer Bodenoberfläche (110) zur Benutzung angeordnet zu werden, und daß die Leiteranordnung so gebaut ist, daß bei Benutzung das genannte entgegengesetzte Ende des umschlossenen Körpers in dem Loch des Behälters (100) so angeordnet ist, daß sein unteres Ende unterhalb und von dem Zugangspunkt (102) des Behälters entfernt liegt; und daß sie mit wenigstens einer Falle oder Giftdosierung versehen ist.

## Revendications

1. Station d'appât pour nuisibles comprenant :
un récipient (100) comprenant un point d'accès (102) fournissant un accès direct ou indirect à un emplacement de poison ou de piège (104) à l'intérieur de celui-ci, le récipient étant monté/situé au-dessus d'une surface de sol/plancher (11), et
un agencement d'échelle (106) ayant une extrémité inférieure au-dessous et à distance dudit point d'accès (102) et menant vers le haut et directement ou indirectement au point d'accès (102), l'agencement d'échelle (106) comprenant au moins une formation de montée (108A, 108B) ; **caractérisée par le fait que** :
- le récipient (100) comprend un trou définissant ledit point d'accès (102) ;
- l'agencement d'échelle comprend un corps renfermé menant vers le haut audit point d'accès (102), et ayant une extrémité inférieure et une extrémité opposée, lesdites extrémités inférieure et opposée étant au moins partiellement ouvertes, et ladite extrémité opposée étant située à l'intérieur dudit trou ;
- une première formation de montée (108A), à l'intérieur dudit corps renfermé, est espacée de ladite extrémité inférieure de l'agencement d'échelle d'une distance de conception minimale de plus de 70 mm, et ladite extrémité inférieure de l'agencement d'échelle est espacée de la surface de sol/plancher (11) d'une distance minimale de 8,89 cm, de façon à permettre à un nuisible cible de monter jusqu'au point d'accès (102) à partir de ladite extrémité inférieure, tout en empêchant des animaux non-cibles de monter.

2. Station d'appât pour nuisibles selon la revendication 1, dans laquelle ladite première formation de montée (108A) est espacée de ladite extrémité inférieure de l'agencement d'échelle d'une distance minimale allant jusqu'à 75 mm.

3. Station d'appât pour nuisibles selon la revendication 1 ou la revendication 2, dans laquelle l'agencement d'échelle (106) a une forme au moins partiellement cylindrique.

4. Station d'appât pour nuisibles selon l'une quelconque des revendications précédentes, dans laquelle l'au moins une formation de montée (108) comprend une fente, indentation ou surface surélevée sur une surface à l'intérieur du corps renfermé (106).

5. Station d'appât pour nuisibles selon l'une quelconque des revendications précédentes, dans laquelle au moins une partie du récipient (100) est dissimulée de façon à ne pas identifier le récipient en tant que station d'appât pour nuisibles.

6. Kit pour une station d'appât pour nuisibles selon l'une quelconque des revendications 1 à 5, comprenant :
- ledit récipient (100) configuré pour être monté au-dessus d'une surface de sol/plancher (110) en vue d'une utilisation ; et
- ledit agencement d'échelle, ladite extrémité opposée dudit corps renfermé étant configurée pour être montée à l'intérieur dudit trou dudit récipient (100) de telle sorte que son extrémité inférieure est située au-dessous et à distance du point d'accès (102) dudit récipient, en utilisation ; et
- au moins un piège ou une dose de poison.
